# EUROPEAN PATENT SPECIFICATION

(11) **EP 4 555 246 B1**
(45) Date of publication and mention of the grant of the patent: **11.03.2026**
(21) Application number: 22754454.1
(22) Date of filing: 11.08.2022
(51) Int. Cl.: F16L 33/22

(54) **CONNECTOR, PIPE SYSTEM AND ASSEMBLING PROCESS**
VERBINDER, ROHRSYSTEM UND MONTAGEVERFAHREN
RACCORD, SYSTÈME DE TUYAU ET PROCÉDÉ D'ASSEMBLAGE

(43) Date of publication of application: 21.05.2025
(73) Proprietor: Elysee Irrigation Ltd, Nicosia (CY)
(72) Inventor: PROTOPAPAS, Panos, 2643 Nocosia (CY)
(74) Representative: Müller Schupfner & Partner Patent- und Rechtsanwaltspartnerschaft mbB (Muc)
(86) International application number: PCT/EP2022/072519
(87) International publication number: WO 2024/032890

(56) References cited:
- DE-A1- 102010 031 872
- GB-A- 1 599 211
- GB-A- 2 597 494
- JP-A- H06 207 694
- US-A- 5 797 633

## Description

The present invention relates to a connector and a pipe system, in particular for use in water irrigation systems, as well as to a process for assembling such pipe system.

Connecting systems, in particular for use in water irrigation systems, are known from the prior art. Examples thereof are known from GB 1 599 211 A or DE 10 2010 031872 A1. To connect plastic or rubber pipes or hoses, a core and a rotating plastic nut is used to force fit the respective pipe or hose on a core body. However, the known solutions appear to be impractical, in particular because the nut always has to be screwed off the core body and as a next step, the hose or pipe has to be slighted on the core, where after the nut can be screwed on the core to fasten the pipe or hose to the connector. It has been found detrimental to use connecting systems, which contain a plurality of loose parts, since this slows down the installation process of an irrigation system. Furthermore, the nut of the known connectors, can screw itself off the core without intentional forces applied by a user.

The objective of the present invention is therefore to provide a connector and a pipe system, as well as a process for mounting a pipe system, which is easy to be set up and which allows for a strong, reliable connection between the pipe or hose and the connector.

These objectives are solved with a connector according to claim 1, a pipe system according to claim 12 and a process according to claim 14. Preferred embodiments of the present invention are described in the depending claims.

According to the invention, a connector is provided, which comprises a core and a nut, wherein the core is formed as an at least partially hollow body with an inner channel comprises a first attachment section and at least one second attachment section, wherein the nut comprises a nut thread which is adapted to interact with a core thread at the core to move the nut along a rotation axis in a mounting direction or in an opposing securing direction, wherein the nut comprises a compression face which is adapted and arranged to press the second attachment section towards the first attachment section, wherein the compression face is arranged at a first distal end of the nut, wherein the second attachment section comprises a first contact surface which is adapted to receive a compressive force from the compression face, wherein the first contact surface has an inclined orientation in relation to the rotation axis and at least partially faces towards the core thread. The connector consists of two basic elements, a core and a nut, which are preferably made of plastic material, in particular preferred of polypropylene and/or polyoxymethylene (POM). The core comprises a first and a second attachment section, between which attachment sections a pipe can be inserted and clamped by the attachment sections. The nut and the core are fastened to each other by respective threads at both parts. The nut is screwed on the core by turning it around a rotation axis relative to the core and consequently moving it in a mounting direction, which mounting direction lies parallel to the rotation axis. After the nut has been completely screwed on the core and a pipe has been inserted into the gap between the first and the second attachment section, the nut is screwed backwards and accordingly moves along a securing direction. The securing direction is defined to be parallel to the mounting direction and facing in exactly the opposite direction. By moving the nut in the securing direction, a compression face at the first distal end of the nut gets to exert a compressive force on the second attachment section, which presses the second attachment section towards the first attachment section and on the pipe, which may be arranged between the second and the first attachment section. To ease the transmission of a force between the nut and the second attachment section, the second attachment section comprises a first contact surface with is adapted to receive a pressing force from the compression face of the nut. The first contact surface of the second attachment section is inclined and faces towards the core thread. In other words, this means that the part of the first contact surface which has a smaller distance from the rotation axis is closer to the core thread than the part of the contact surface which has the maximum distance from the rotation axis. The inventive feature of the present invention is to fasten the pipe by screwing the nut a certain length off the core, e.g. in the securing direction, instead of screwing the nut on the core, e.g. along the mounting direction. This allows to pre-assemble the nut and the core while the end-user only has to handle one pre-assembled connector, to which the pipe can by connected by only rotating the nut backwards until the pipe is sufficiently secured between the attachment sections of the core. The advantage of clamping the pipe only within separate sections of the core is, that there is no rotational abrasive contact between the nut and the pipe, which could cause abrasive wear. This allows for a long-life and secure connection between the connector and the pipe

According to the invention, the second attachment section comprises a second contact surface which is formed at least partially cylindrical around the rotation axis and is adapted to exert a holding force on a pipe. The second contact surface of the second attachment section is adapted to encompass a pipe which is inserted between the second attachment section and the first attachment section. Thereby, the at least partially cylindrical second contact surface matches with the outer cylindrical surface of a pipe. It is preferred, that in a non-compressed state of the second attachment section, the diameter of the second contact surface is larger than in a compressed state of the second attachment section. The compressed state is defined to be present when the second attachment section is pressed against the pipe by the nut. This feature eases the insertion of a pipe into the gap between the first and the second attachment section. It is furthermore preferred that the contact area between the second contact surface and the pipe is as large as possible, preferably more the 0,8-times the total area of the second contact surface, to allow for a strong frictional connection between the connector and the pipe.

Furthermore preferred, the first attachment section has an outer surface which outer diameter inclines along the mounting direction, wherein the outer surface preferably has a conical shape. In other words, the preferred conical shape of the first attachment section comprises an inclining outer diameter starting from the core's outer end towards the core thread. This eases the insertion of a pipe into the core, since the pipe can be first plugged on the end of the first attachment section with the lowest outer diameter and then pushed towards the core thread, wherein the pipe is stretched until it can be pushed over the section with the largest outer diameter of the first attachment section. This feature eases the assembling procedure, since the pipe is held to a certain degree by the frictional connection between the first attachment section and the inner surface of the pipe due to the elastic resilience of the pipe material. The connection between the pipe and the connector prevents the pipe from falling off the connector before the nut has been rotated and urged against the second attachment section. It is furthermore preferred, that the first attachment section has, additional to the outer surface which inclines along the mounting direction, another conically formed outer surface which inclines along the securing direction. The second conical surface faces away from the core threat and eases the assembling of the nut and the core, such that it reduces the force to press the nut over the second attachment section.

Preferably, the second attachment section is arranged substantially at the same axial position along the rotation axis as the largest diameter of the outer surface. Placing the second attachment section at the same axial position as the largest diameter portion of the outer surface eases the production of connectors. In particular preferred, the connector is a plastic part, which is formed by injection molding. The separation of the mold halves for taking off the fully molded connector, can be improved by avoiding undercut geometry, which is achieved by positioning the second attachment section aligned with the first attachment section.

Furthermore preferred, the core comprises at least one holding arm, which extends from the core thread parallel to and along the securing direction to the second attachment section, wherein the holding arm is formed as one piece with the core and the second attachment section. The holding arm positions the second attachment section at substantially same axial position as the first attachment section. Furthermore, the holding arm allows for displacement of the second attachment section orthogonal to the rotational axis which is needed to insert the pipe and to press the second attachment section against the pipe. Thereby, the holding arm is made of the same plastic material as the core and the second attachment section and allows for elastic deformation.

In particular preferred, the holding arm's length parallel to the rotation axis is a multiple of the holding arm's extension length orthogonal to the rotation axis. To allow a large displacement of the second attachment section orthogonal to the rotation axis, the holding arm's length parallel to the rotation axis is multiple times the holding arm's extension length in the other directions. This means that the holding arm preferably is a long, thin section of the core, which can be easily bent without risking to break the material. In a preferred embodiment the length of the holding arm parallel to the rotation axis is 3 times the length is 2 to 4 times the length of the extension of the holding are in other directions.

In a preferred embodiment, at least one tooth is formed as protrusion at the holding arm or the second contact surface, wherein the tooth faces towards the first attachment section. The tooth serves to additionally strengthen the connection between the second attachment section (or the holding arm) and the pipe. In particular the tooth incises the outer surface of the pipe and creates a form-fit which supports the pipe in its axial position.

Preferably the second attachment section has an at least partial ring shape, preferably a semicircular ring shape. The partial ring-shape of the second attachment section allows to match the cylindrical outer shape of a pipe and the preferred cylindrical inner surface of the nut. In the relaxed state the second attachment section preferably extends along a circular arc of 165 to 175 degrees. This serves to leave a gap between two second attachment sections when they are pressed against the first attachment section to hold a pipe at the first attachment section.

In particular preferred, the second attachment section comprises at least one recess at the first contact surface which extends from the first contact surface towards the second contact surface. To ease the elastic deformation of the second attachment section, the at least one recess at the first contact surface, which also is the outer surface of the second attachment section, allows for easier deformation to reduce the inner diameter of the second contact surface. In other words, the recesses are preferably formed as cuts which are placed at the first contact surface and extend into the material of the second attachment section.

Furthermore preferred, the first attachment section as a sharp edge at the largest diameter of the outer surface. The preferred sharp edge is in other words the end of the conical outer shape of the first attachment section. It allows to incise the inner surface of a pipe to improve and strengthen the connection between the pipe and the core of the connector. Furthermore, the sharp edge improves the water tightness of the connection between the pipe and the core.

In a preferred embodiment, the core comprises two second attachment sections, which are each held by one holding arm and are arranged on opposing sides of the first attachment section. In this preferred embodiment the pipe is pressed against the first attachment section by two second attachment sections which are arranged opposite to each other with the first attachment section in the middle. Each second attachment section is thereby held by a holding arm. Since the core with the two second attachment sections has a plane symmetrical geometry, it is easy to be produced by a molding process. Furthermore, the two second attachment sections, which in the compressed state encompass the pipe for almost 360°, preferably about 345° to 355° degrees, allow for a strong connection between the connector and the pipe.

Preferably, the core furthermore comprises a gripping section, which preferably comprises an ergonomically shaped geometry, wherein the gripping section is arranged adjacent to the core thread. To allow a user to easily hold the core of the connector while screwing the nut on or off the core, the gripping section has an ergonomically shaped outer geometry. This economically shaped outer geometry is for instance characterized by rounded edges and concave recessions, which allow the users fingertips to easily apply a force and momentum to the core. In a furthermore preferred embodiment, the gripping section is made of several ribs which are distanced by each other and lower the weight of the core and reduce the material needed to produce a connector according to the present invention. It is furthermore preferred, that the gripping section has substantially the same outer diameter as the nut, which avoids edges sticking up and reduces the risk of the connector being caught at other objects when moved on the ground.

Furthermore preferred, said core thread, said first attachment section and said a second attachment section are part of a first group, wherein the core comprises a second group of a core thread, a first attachment section and a second attachment section, wherein said second group is arranged plane symmetrically to the first group adjacent to the gripping portion. This embodiment allows to connect not only one pipe to the connector but two pipes, wherein the connector serves as the connecting piece between the two pipes. Accordingly, the first attachment section, the second attachment section and the core thread as described before, are part of the first group, while the second group, containing the same features only on the other and of the core, is arranged plane symmetrically at the other side of the gripping section. In terms of the present invention it would furthermore be preferred and possible to arrange a third or fourth group at one core element, for instance to make the connector part of a crossing of more than two pipes. The respective mounting and securing direction of each group is of course defined depending on the end of the respected group where the pipe is attached.

Preferably, the core comprises at least one core locking protrusion which is arranged adjacent to the core tread, wherein the nut comprises a nut locking protrusion which is arranged at a second distal end of the nut, wherein the core locking protrusion and the nut locking protrusion engage with each other when the nut is screwed completely on the core to secure the nut against rotation relative to the core and wherein furthermore preferred the core locking protrusion and the nut locking protrusion also engage with each other when the nut presses the second attachment section on a pipe to secure the nut in this respective rotational position relative to the core. The nut locking protrusions preferably protrude from the inner side of the nut towards the rotation axis, while the core locking protrusions preferably prodrude from the outer side of the core away from the rotation axis. The locking protrusions serve to secure the nut against rotation relative to the core at certain preferred rotational positions. It is advantageous that the nut is prevented from rotation in the mounted state of the connector. Furthermore, it is also preferred, that the nut is secured in the secured state of the connector, to secure the connection of the connector with the pipe. It is in particular preferred, that after overcoming the locking force exerted by the locking protrusions in the mounted state, the nut can be rotated about 180° to be locked again and to be secured from rotating back in the secured state of the connector. Preferably, two core locking protrusions are arranged at the outer side of the core at the 12 o'clock and the 6 o'clock angular position. Accordingly, it is preferred, that the nut has a plurality of nut locking protrusions, which are adapted to interact with the core locking protrusions in at least two rotational positions of the nut relative to the core.

According to the invention, a pipe system is provided, in particular for use in irrigation systems, comprising a connector according to one of the preceding claims and a pipe, wherein the connector has a disassembled state in which the nut and the core are not connected to each other, wherein the connector has a mounted state in which the nut completely screwed on the core along a mounting direction and a nut locking protrusion engages with a core locking protrusion, wherein the connector has a secured state in which the nut applies a force on the second attachment section and the pipe is secured against displacement between the first and the second attachment section. The pipe system is defined as the combination of a pipe with the connector as described before. The pipe system has a first state, which is called the disassembled state, in which the nut the core and the pipe are not connected to each other and are present as loose parts. To mount the pipe system, the connector can be brought into a mounted state in which the nut is completely screwed on the core. In the mounted state, a nut locking protrusion engages with the core locking protrusion to prevent the nut from rotating relative to the core. It is to be understood that the holding force exerted by the locking protrusions can be overcome with manual forces to allow the mounting and dismounting of the nut. Finally, the connector has secured state, which is defined as the state, in which the pipe is held at the connector. While the mounted state is defined as a preassembled state in which the connector can be shipped to end users, the secured state is the final state in which the connector is adapted to hold a pipe. To bring the connector into the secured state, a pipe has to be inserted between the first and the second attachment section and afterwards the nut has to be screwed about a degree of preferably 90° to 270° relative to the core, such that the compression surface at the nut acts on the second attachment section and presses it towards the pipe. In the secured state the pipe is held between the first and the second attachment section as described above.

Preferably, in the secured state, compared to the mounted state the nut is offset along the securing direction. The secured state is defined as the state in which the nut is offset along the securing direction e.g. in which the nut is screwed away from the preferred gripping section. The geometry of the core and the nut is defined such that it is impossible to screw off the nut completely from the core while a pipe is inserted between the first and the second attachment section without breaking the nut or parts of the core. In particular in cases of using the connector and the pipe system in open field this feature lowers the risk of losing parts of the respective connection system. Preferably the core locking protrusion and the nut looking protrusion interact also in the state where the connector is in the secured position. This allows to prevent rotational movements of the nut relative to the core not only in the mounted state but also in the secured state of the connector.

According to the present invention a process for assembling a connector and a pipe, comprises the steps of:
a) Providing a connector with a core and a nut;
b) Screwing the nut on the core along a mounting direction until a core locking protrusion formed at the core engages with a nut locking protrusion formed at the nut, wherein the engagement between the core locking protrusion and the nut locking protrusion secures the nut and the core against relative rotational movements;
c) Inserting a pipe between a first attachment section and a second attachment section of the core;
d) Applying a rotational momentum between the nut and the core to overcome the engagement of the nut locking protrusion and the core locking protrusion to move the nut along a securing direction relative to the core, wherein the securing direction opposes the mounting direction, and wherein the nut forces the first attachment section towards the second attachment section, such that the pipe is secured between the first and the second attachment section.

The main difference between the process according to the present invention and mounting processes known from the prior art is that the nut is first screwed on the core and afterwards screwed off a bit to secure a pipe between the core attachment sections. This allows to preassemble the connector, then insert a pipe and finally rotate the nut backwards relative to the core to secure the pipe at the connector.

It is preferred, that assembling the nut and the core is only possible without a pipe being placed between the fist attachment section and the second attachment section. This means that assembling and disassembling the nut and the core is only possible when there is no pipe inserted between the attachment sections of the core.

Preferred embodiments of the present invention are described with regard to the attached drawings.

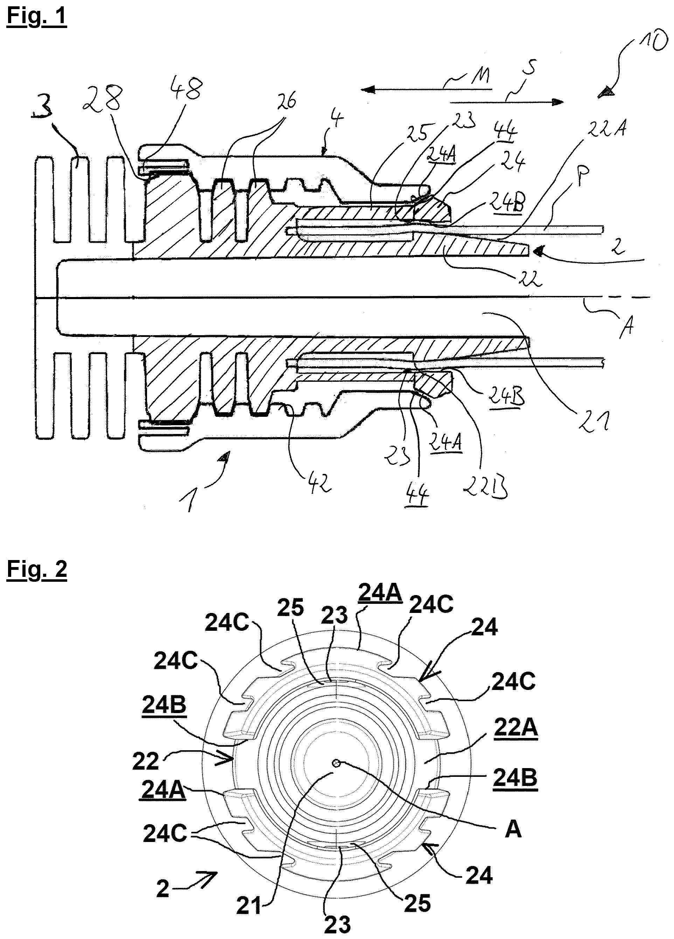

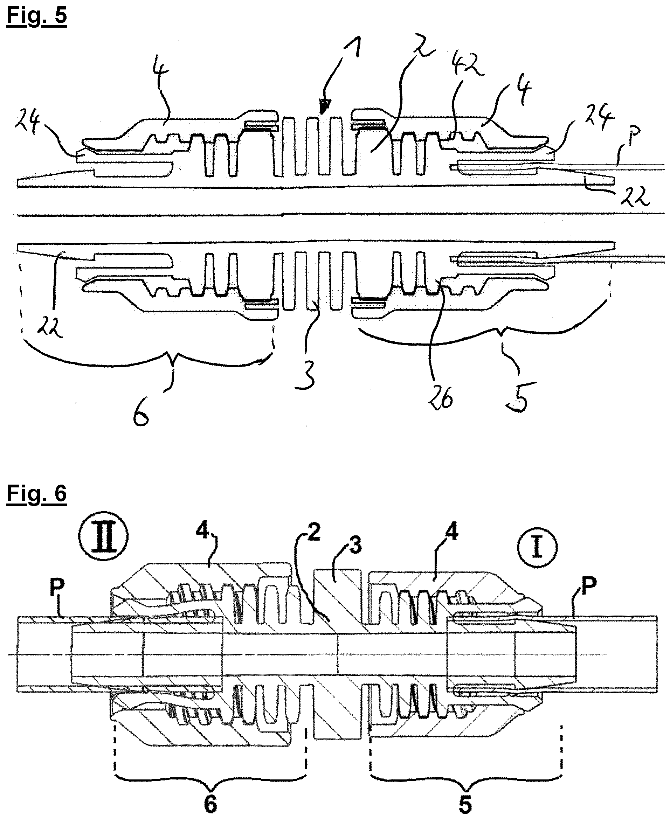

**Figure 1** shows a cut view of a preferred embodiment of a pipe system 10 with a connector 1. The connector 1 comprises a core 2 and nut 4, wherein the connector 1 in figure 1 is shown in the mounted state I. The nut 4 is completely screwed on the core 2, which in figure 1 is the most left position relative to the core 2. In the mounted state (I) the at least one core locking protrusion 28 engages with the nut locking protrusion 48. To bring the second attachment section 24 into an engagement with the pipe P, the nut 4 is screwed and consequently moved in the securing direction S. In the secured state II (shown in Fig. 5) the compression face 44 is urged against the first contact surface 24A to press the second attachment section 24 on the pipe P. The longitudinal force along the securing direction S is thereby generated by the nut thread 42 which interacts with the core thread 26. In the secured state II, the second contact surface 24B of the second attachment section 24 is preferably contacting the outer surface of the pipe P at preferably substantially the whole extent of the second contact surface 24B. Since the first attachment section 22 has a sharp edge 22B the pipe P is secured by a press fit of the outer surface 22A of the first attachment section 22 and the second contact surface 24B of the second attachment section 24 as well as by a form-fit of the sharp edge 22B which cuts into the material of the pipe P.

**Figure 2** shows a frontal view on core 2 of the embodiment shown in figure 1. Each of the preferred semi-circular ring-shaped second attachment sections 24 comprises at the first contact surface 24A several recesses 24C which improve the bending and elastic deformation of the second attachment section 24 around the rotation axis A in the secured state II. This helps to improve the friction engagement of the second contact surface 24B of the second attachment sections with the outer, cylindrical surface of the pipe P.

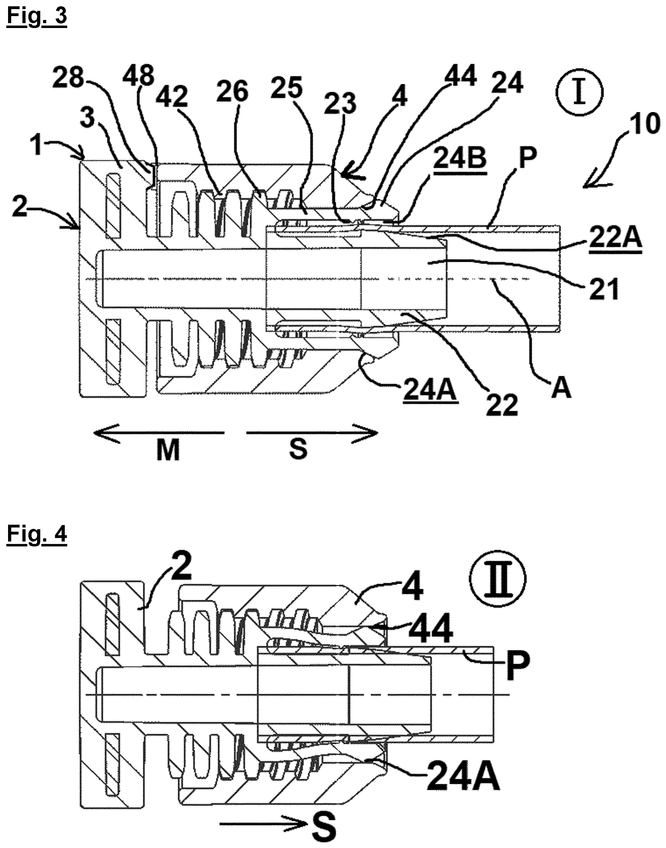

**Figure 3** shows an embodiment of the preferred connector 1 in the mounted state I. The mounted state I is characterised by the nut 4 screwed as much as possible on the core 2 and thereby moved as much as possible along the mounting direction M relative to the core 2. Preferably, there exists a gap between the compression face 44 of the nut 4 and the first contact surface 24A while the connector 1 is in the mounted state I. Preferably, a core locking protrusion 28 is arranged at the side of the gripping section 3 facing in the securing direction S. This embodiment of the core locking protrusion 28 is adapted to interlock with and according not locking protrusion 48 formed at the end surface of the nut 4. Preferably the embodiments of the core locking protrusion 28 and the nut locking protrusion 48 of figures 1 and 3 can be combined, which results in a stronger lock, when the connector 1 is brought into the mounted state I. Furthermore preferred, the gripping section 3 of the embodiment of figure 3 is formed as solid section without ribs as for instance shown in the embodiment of figure 1. The other features of the embodiment of figure 3 equal the features already explained for the embodiment of figure 1.

Figure 4 shows the embodiment of figure 3 in the secured state II. The secured state II is preferably characterized by the nut 4 being screwed along the securing direction S, that the inner part of the compression face 44 presses the second attachment section 24 on the pipe P. Preferably, in the secured state II the cylindrical part of the compression face 44 gets in contact with the second attachment section 24 that the momentum caused by the conical surface parts of the first contact surface 24A and the compression face 44 is minimized or equals zero. This helps to keep the nut 4 in the secured state II relative to the core 2 without the necessity of further interaction between locking protrusions 28, 48 (not shown in Figure 4) in the secured state II.

While the pipe system 10 of figures 1, 3 and 4 discloses a preferred embodiment of a connector 1 which is used as an end cap to close the open end of a pipe P, the pipe system 10 of **figure 5** has a connector 1 which is adapted to connect two pipes P with each other. The first group 5, comprising a core thread 26, a first attachment section 22 and a second attachment section 24 is arranged on the right-hand side of the connector 1 and the second group 6, consisting of the same sections, is situated on the left-hand side of the connector 1. Both, the first group 5 and the second group 6 are formed as one piece with one central gripping section 3. In other words, the core 2 according to the embodiment of figure 5 is a two-sided core 2 with one inner channel 21 and a central gripping section 3, wherein at each of the right and left side of the gripping section 3 a nut 4 is screwed on the core 2 to secure 1 a pipe P on each side of the gripping section 3. The inner channel 21 connects the two pipes P with each other.

Figure 6 discloses another preferred embodiment of a pipe system 10 with a connector 1, which is adapted to connect to pipes P. The first group 5 of the connector 1 is shown in the mounted state I. The second group 6 of the connector 1 is shown in the secured state II and it is visible on the left side of figure 6, that the nut 4 in the secured state II has a greater distance from the gripping section 3 then the nut 4 shown on the right-hand side, being in the mounted state I.

### Reference numerals:

- 1 -: connector
- 2 -: core
- 3 -: gripping section
- 4 -: nut
- 5 -: first group
- 6 -: second group
- 10 -: pipe system
- 21 -: inner channel
- 22 -: first attachment section
- 22A -: outer surface
- 22B -: sharp edge
- 23 -: tooth
- 24 -: second attachment section
- 24A -: second contact surface
- 24B -: first contact surface
- 24C -: recess
- 25 -: holding arm
- 26 -: core thread
- 28 -: core locking protrusion
- 41 -: first distal end
- 42 -: second distal end
- 43 -: nut thread
- 48 -: nut locking protrusion
- 44 -: compression face
- A -: rotation axis
- I -: mounted state
- II -: secured state
- M -: mounting direction
- S -: securing direction
- P -: pipe

## Claims

1. Connector (1), in particular for connecting pipes, comprising a core (2) and a nut (4),
wherein the core (2) is formed as a hollow body with an inner channel (21) and comprises a first attachment section (22) and at least one second attachment section (24),
wherein the nut (4) comprises a nut thread (43) which is adapted to interact with a core thread (26) at the core (2) to move the nut along a rotation axis (A) in a mounting direction (M) or in an opposing securing direction (S),
wherein the nut (4) comprises a compression face (44) which is adapted and arranged to press the second attachment section (24) towards the first attachment section (22),
wherein the compression face (44) is arranged at a first distal end (41) of the nut (4),
wherein the second attachment section (24) comprises a first contact surface (24A) which is adapted to receive a compressive force from the compression face (44),
wherein the first contact surface (24A) has an inclined orientation in relation to the rotation axis (A) and at least partially faces towards the core thread (26), **characterized in that**,
the second attachment section (24) comprises a second contact surface (24B) which is formed at least partially cylindrical around the rotation axis (A) and is adapted to exert a holding force on a pipe (P).

2. Connector (1) according to one of the preceding claims,
wherein the first attachment section (22) has an outer surface (22A) which outer diameter inclines along the mounting direction (M),
wherein the outer surface (22A) preferably has a conical shape,
wherein preferably the second attachment section (24) is arranged substantially at the same axial position along the rotation axis (A) as the largest diameter of the outer surface (22A).

3. Connector (1) according to one of the preceding claims,
wherein the core (2) comprises at least one holding arm (25), which extends from the core thread (26) parallel to and along the securing direction (S) to the second attachment section (24),
wherein the holding arm (25) is formed as one piece with the core (2) and the second attachment section (24),
wherein preferably the holding arm's (25) length parallel to the rotation axis (A) is a multiple of the holding arm's (25) extension length orthogonal to the rotation axis (A).

4. Connector (1) according to claim 3,
wherein at least one tooth (23) is formed as protrusion at the holding arm (25) or the second contact surface (24A),
wherein the tooth (23) faces towards the first attachment section (22).

5. Connector (1) according to one of the preceding claims,
wherein the second attachment section (24) has an at least partial ring shape, preferably a semicircular ring shape.

6. Connector (1) according to one of the preceding claims,
wherein the second attachment section (24) comprises at least one recess (24C) at the first contact surface (24B) which extends from the first contact surface (24B) towards the second contact surface (24A).

7. Connector (1) according to one of the preceding claims,
wherein the first attachment section (22) as a sharp edge (22B) at the largest diameter of the outer surface (22A).

8. Connector (1) according to one of the preceding claims,
wherein the core (2) comprises two second attachment sections (24), which are each held by one holding arm (25) and are arranged on opposing sides of the first attachment section (22).

9. Connector (1) according to one of the preceding claims,
wherein the core (2) furthermore comprises a gripping section (3), which preferably comprises an ergonomically shaped geometry,
wherein the gripping section is arranged adjacent to the core thread (26).

10. Connector (1) according to claim 9,
wherein said core thread (26), said first attachment section (22) and said a second attachment section (24) are part of a first group (5),
wherein the core (2) comprises a second group (6) of a core thread (26), a first attachment section (22) and a second attachment section (24),
wherein said second group (6) is arranged plane symmetrically to the first group (5) adjacent to the gripping portion (3).

11. Connector (1) according to one of the preceding claims,
wherein the core (2) comprises at least one core locking protrusion (28) which is arranged adjacent to the core tread (26),
wherein the nut (4) comprises a nut locking protrusion (48) which is arranged at a second distal end of the nut (4),
wherein the core locking protrusion (28) and the nut locking protrusion (48) engage with each other when the nut (4) is screwed completely on the core (2) to secure the nut against rotation relative to the core (2) and
wherein preferably the core locking protrusion (28) and the nut locking protrusion (48) also engage with each other when the nut (4) presses the second attachment section (24) on a pipe (P) to secure the nut (4) in this respective rotational position relative to the core (2).

12. **Pipe system** (10), in particular for use in irrigation systems,
comprising a connector (1) according to one of the preceding claims and a pipe (P),
wherein the connector (1) has a disassembled state in which the nut (4) and the core (2) are not connected to each other,
wherein the connector (1) has a mounted state (I) in which the nut (4) completely screwed on the core (2) along a mounting direction (M) and a nut locking protrusion (48) engages with a core locking protrusion (28),
wherein the connector (1) has a secured state (II) in which the nut (4) applies a force on the second attachment section (24) and the pipe (P) is secured against displacement between the first and the second attachment section (22, 24).

13. Pipe system (10) according to claim 12,
wherein in the secured state (II), compared to the mounted state (I) the nut (4) is offset along the securing direction (S).

14. A **process for assembling** a connector (1) and a pipe (P), comprising the steps of:
a) Providing a connector (1) according to one of claims 1 - 11 ;
b) Screwing the nut (4) on the core (2) along a mounting direction (M) until the core locking protrusion (28) formed at the core (2) engages with the nut locking protrusion (48) formed at the nut (4),
wherein the engagement between the core locking protrusion (28) and the nut locking protrusion (48) secures the nut (4) and the core (2) against relative rotational movements;
c) Inserting a pipe (P) between the first attachment section (22) and the second attachment section (24) of the core;
d) Applying a rotational momentum between the nut (4) and the core (2) to overcome the engagement of the nut locking protrusion (48) and the core locking protrusion (28) to move the nut (4) along the securing direction (S) relative to the core (2),
wherein the securing direction (S) opposes the mounting direction (M), and wherein the nut forces the first attachment section (22) towards the second attachment section (24), such that the pipe (P) is secured between the first and the second attachment section (22,24).

15. The process according to claim 14,
wherein assembling the nut (4) and the core (2) is only possible without a pipe (P) being placed between the fist attachment section (22) and the second attachment section (24).

## Patentansprüche

1. Verbinder (1), insbesondere zum Verbinden von Rohren, mit einem Kern (2) und einer Schraubenmutter (4),
wobei der Kern (2) als Hohlkörper mit einem Innenkanal (21) ausgebildet ist und einen ersten Befestigungsabschnitt (22) sowie mindestens einen zweiten Befestigungsabschnitt (24) aufweist,
wobei die Schraubenmutter (4) ein Gewinde aufweist (43) aufweist, das dazu ausgelegt ist, mit einem Kern-Gewinde (26) am Kern (2) zusammenzuwirken, um die Schraubenmutter entlang einer Drehachse (A) in einer Montagerichtung (M) oder in einer entgegengesetzten Sicherungsrichtung (S) zu bewegen,
wobei die Schraubenmutter (4) eine Druckfläche (44) aufweist, die dazu ausgelegt und angeordnet ist, den zweiten Befestigungsabschnitt (24) in Richtung des ersten Befestigungsabschnitts (22) zu drücken,
wobei die Druckfläche (44) an einem ersten distalen Ende (41) der Schraubenmutter (4) angeordnet ist,
wobei der zweite Befestigungsabschnitt (24) eine erste Kontaktfläche (24A) umfasst, die dazu ausgelegt ist, eine Druckkraft von der Druckfläche (44) aufzunehmen,
wobei die erste Kontaktfläche (24A) in Bezug auf die Drehachse (A) eine geneigte Ausrichtung aufweist und zumindest teilweise zum Kern (26) hin ausgerichtet ist,
**dadurch gekennzeichnet, dass**
der zweite Befestigungsabschnitt (24) eine zweite Kontaktfläche (24B) umfasst, die zumindest teilweise zylindrisch um die Drehachse (A) herum ausgebildet ist und dazu ausgelegt ist, eine Haltekraft auf ein Rohr (P) auszuüben.

2. Verbinder (1) gemäß einem der vorhergehenden Ansprüche,
wobei der erste Befestigungsabschnitt (22) eine Außenfläche (22A) aufweist, deren Außendurchmesser entlang der Befestigungsrichtung (M) geneigt ist,
wobei die Außenfläche (22A) vorzugsweise eine konische Form aufweist, wobei vorzugsweise der zweite Befestigungsabschnitt (24) im Wesentlichen an derselben axialen Position entlang der Drehachse (A) angeordnet ist wie der größte Durchmesser der Außenfläche (22A).

3. Verbinder (1) gemäß einem der vorhergehenden Ansprüche,
wobei der Kern (2) mindestens einen Haltearm (25) umfasst, der sich vom Kerngewinde (26) parallel und entlang der Befestigungsrichtung (S) zum zweiten Befestigungsabschnitt (24) erstreckt (24) erstreckt,
wobei der Haltearm (25) einstückig mit dem Kern (2) und dem zweiten Befestigungsabschnitt (24) ausgebildet ist,
wobei vorzugsweise die Länge des Haltearms (25) parallel zur Drehachse (A) ein Vielfaches der Verlängerungslänge des Haltearms (25) orthogonal zur Drehachse (A) beträgt.

4. Verbinder (1) gemäß Anspruch 3,
wobei mindestens ein Zahn (23) als Vorsprung am Haltearm (25) oder an der zweiten Kontaktfläche (24A) ausgebildet ist,
wobei der Zahn (23) zum ersten Befestigungsabschnitt (22) hin ausgerichtet ist.

5. Verbinder (1) gemäß einem der vorhergehenden Ansprüche,
wobei der zweite Befestigungsabschnitt (24) zumindest teilweise ringförmig, vorzugsweise halbkreisförmig, ausgebildet ist.

6. Verbinder (1) gemäß einem der vorhergehenden Ansprüche,
wobei der zweite Befestigungsabschnitt (24) mindestens eine Aussparung (24C) an der ersten Kontaktfläche (24B) umfasst, die sich von der ersten Kontaktfläche (24B) zur zweiten Kontaktfläche (24A) erstreckt.

7. Verbinder (1) gemäß einem der vorhergehenden Ansprüche,
wobei der erste Befestigungsabschnitt (22) als scharfe Kante (22B) am größten Durchmesser der Außenfläche (22A) ausgebildet ist.

8. Verbinder (1) gemäß einem der vorhergehenden Ansprüche,
wobei der Kern (2) zwei zweite Befestigungsabschnitte (24) umfasst, die jeweils von einem Haltearm (25) gehalten werden und auf gegenüberliegenden Seiten des ersten Befestigungsabschnitts (22) angeordnet sind.

9. Verbinder (1) gemäß einem der vorhergehenden Ansprüche,
wobei der Kern (2) ferner einen Griffabschnitt (3) umfasst, der vorzugsweise eine ergonomisch geformte Geometrie aufweist,
wobei der Griffabschnitt benachbart zum Kerngewinde (26) angeordnet ist.

10. Verbinder (1) gemäß Anspruch 9,
wobei das Kern-Gewinde (26), der erste Befestigungsabschnitt (22) und der zweite Befestigungsabschnitt (24) Teil einer ersten Gruppe (5) sind,
wobei der Kern (2) eine zweite Gruppe (6) aus einem Gewinde (26), einem ersten Befestigungsabschnitt (22) und einem zweiten Befestigungsabschnitt (24) umfasst,
wobei die zweite Gruppe (6) ebenen symmetrisch zur ersten Gruppe (5) benachbart zum Greifabschnitt (3) angeordnet ist.

11. Verbinder (1) gemäß einem der vorhergehenden Ansprüche,
wobei der Kern (2) mindestens einen Kernverriegelungsvorsprung (28) umfasst, der benachbart zum Kernprofil (26) angeordnet ist,
wobei die Schraubenmutter (4) einen Mutterverriegelungsvorsprung (48) umfasst, der an einem zweiten distalen Ende der Schraubenmutter (4) angeordnet ist,
wobei die Kernverriegelungsvorsprüngen (28) und der Mutterverriegelungsvorsprung (48) ineinandergreifen, wenn die Schraubenmutter (4) vollständig auf den Kern (2) geschraubt ist, um die Schraubenmutter gegen eine Drehung relativ zum Kern (2) zu sichern, und
wobei vorzugsweise die Kernverriegelungsvorsprünge (28) und die Mutterverriegelungsvorsprünge (48) auch miteinander in Eingriff stehen, wenn die Schraubenmutter (4) den zweiten Befestigungsabschnitt (24) auf ein Rohr (P) drückt, um die Schraubenmutter (4) in dieser jeweiligen Drehposition relativ zum Kern (2) zu sichern.

12. **Rohrsystem** (10), insbesondere zur Verwendung in Bewässerungssystemen,
bestehend aus einem Verbinder (1) gemäß einem der vorstehenden Ansprüche und einem Rohr (P),
wobei der Verbinder (1) einen zerlegten Zustand aufweist, in dem die Schraubenmutter (4) und der Kern (2) nicht miteinander verbunden sind, wobei das Verbindungsstück (1) einen montierten Zustand (I) aufweist, in dem die Schraubenmutter (4) entlang einer Montagerichtung (M) vollständig auf den Kern (2) geschraubt ist und ein Mutterverriegelungsvorsprung (48) mit einem Kernverriegelungsvorsprung (28) in Eingriff steht,
wobei das Verbindungsstück (1) einen gesicherten Zustand (II) aufweist, in dem die Schraubenmutter (4) eine Kraft auf den zweiten Befestigungsabschnitt (24) ausübt und das Rohr (P) gegen eine Verschiebung zwischen dem ersten und dem zweiten Befestigungsabschnitt (22, 24) gesichert ist.

13. Rohr (10) gemäß Anspruch 12,
wobei im gesicherten Zustand (II) die Schraubenmutter (4) im Vergleich zum montierten Zustand (I) entlang der Sicherungsrichtung (S) versetzt ist.

14. **Verfahren zum Zusammenbau** eines Verbindungsstücks (1) und eines Rohrs (P), das die folgenden Schritte umfasst:
a) Bereitstellen eines Verbindungsstücks (1) gemäß einem der Ansprüche 1 bis 11;
b) Aufschrauben der Schraubenmutter (4) auf den Kern (2) entlang einer Montagerichtung (M), bis die am Kern (2) ausgebildeten Kernverriegelungsvorsprünge (28) in die an der Schraubenmutter (4) ausgebildeten Mutterverriegelungsvorsprünge (48) eingreifen,
wobei der Eingriff zwischen den Kernverriegelungsvorsprüngen (28) und den Mutterverriegelungsvorsprüngen (48) die Schraubenmutter (4) und den Kern (2) gegen relative Drehbewegungen sichert;
c) Einführen eines Rohrs (P) zwischen dem ersten Befestigungsabschnitt (22) und dem zweiten Befestigungsabschnitt (24) des Kerns;
d) Aufbringen eines Drehmoments zwischen der Schraubenmutter (4) und dem Kern (2), um den Eingriff zwischen dem Mutterverriegelungsvorsprung (48) und den Kernverriegelungsvorsprüngen (28) zu überwinden und die Schraubenmutter (4) entlang der Sicherungsrichtung (S) relativ zum Kern (2) zu bewegen,
wobei die Sicherungsrichtung (S) der Montagrichtung (M) entgegengesetzt ist und
wobei die Schraubenmutter den ersten Befestigungsabschnitt (22) in Richtung des zweiten Befestigungsabschnitts (24) drückt, so dass das Rohr (P) zwischen dem ersten und dem zweiten Befestigungsabschnitt (22, 24) befestigt wird.

15. Verfahren gemäß Anspruch 14,
wobei das Zusammenbauen der Schraubenmutter (4) und des Kerns (2) nur möglich ist, wenn kein Rohr (P) zwischen dem ersten Befestigungsabschnitt (22) und dem zweiten Befestigungsabschnitt (24) angeordnet ist.

## Revendications

1. Raccord (1), en particulier pour raccorder des tuyaux, comprenant un noyau (2) et un écrou (4),
dans lequel
le noyau (2) est formé comme un corps creux avec un canal interne (21) et comprend une première section de fixation (22) et au moins une deuxième section de fixation (24),
l'écrou (4) comprend un taraudage d'écrou (43) qui est adapté pour interagir avec un filetage de noyau (26) situé sur le noyau (2), afin de déplacer l'écrou le long d'un axe de rotation (A) dans une direction de montage (M) ou dans une direction de blocage opposée (S),
l'écrou (4) comprend une face de compression (44) qui est adaptée et agencée pour presser la deuxième section de fixation (24) vers la première section de fixation (22),
la face de compression (44) est agencée à une première extrémité distale (41) de l'écrou (4),
la deuxième section de fixation (24) comprend une première surface de contact (24B) qui est adaptée pour recevoir une force de compression provenant de la face de compression (44),
la première surface de contact (24B) présente une orientation inclinée par rapport à l'axe de rotation (A) et est au moins partiellement tournée vers le filetage (26) du noyau,
**caractérisé en ce que**
la deuxième section de fixation (24) comprend une deuxième surface de contact (24A) qui est formée au moins partiellement de manière cylindrique autour de l'axe de rotation (A) et est adaptée pour exercer une force de maintien sur un tuyau (P).

2. Raccord (1) selon la revendication précédente,
dans lequel la première section de fixation (22) présente une surface extérieure (22A) dont le diamètre extérieur est incliné le long de la direction de montage (M),
de préférence, la surface extérieure (22A) présente une forme conique,
de préférence, la deuxième section de fixation (24) est disposée sensiblement à la même position axiale le long de l'axe de rotation (A) que le plus grand diamètre de la surface extérieure (22A).

3. Raccord (1) selon l'une des revendications précédentes,
dans lequel le noyau (2) comprend au moins un bras de maintien (25) qui s'étend depuis le filetage (26) du noyau parallèlement et le long de la direction de blocage (S) vers la deuxième section de fixation (24),
le bras de maintien (25) est formé d'un seul tenant avec le noyau (2) et avec la deuxième section de fixation (24),
de préférence, la longueur du bras de maintien (25) parallèle à l'axe de rotation (A) est un multiple de la longueur d'extension du bras de maintien (25) orthogonale à l'axe de rotation (A).

4. Raccord (1) selon la revendication 3,
dans lequel au moins une dent (23) est formée comme une saillie au niveau du bras de maintien (25) ou de la deuxième surface de contact (24A),
la dent (23) est tournée vers la première section de fixation (22).

5. Raccord (1) selon l'une des revendications précédentes,
dans lequel la deuxième section de fixation (24) a une forme d'anneau au moins partiel, de préférence une forme d'anneau semi-circulaire.

6. Raccord (1) selon l'une des revendications précédentes,
dans lequel la deuxième section de fixation (24) comprend au moins un évidement (24C) au niveau de la première surface de contact (24B), qui s'étend depuis la première surface de contact (24B) vers la deuxième surface de contact (24A).

7. Raccord (1) selon l'une des revendications précédentes,
dans lequel la première section de fixation (22) présente un bord tranchant (22B) au niveau du plus grand diamètre de la surface extérieure (22A).

8. Raccord (1) selon l'une des revendications précédentes,
dans lequel le noyau (2) comprend deux deuxièmes sections de fixation (24) qui sont chacune maintenues par un bras de maintien (25) et sont disposées sur les côtés opposés de la première section de fixation (22).

9. Raccord (1) selon l'une des revendications précédentes,
dans lequel le noyau (2) comprend en outre une partie de préhension (3) qui présente de préférence une géométrie de forme ergonomique,
la partie de préhension est disposée à proximité du filetage (26) du noyau.

10. Raccord (1) selon la revendication 9,
dans lequel ledit filetage (26) du noyau, ladite première section de fixation (22) et ladite deuxième section de fixation (24) font partie d'un premier groupe (5),
le noyau (2) comprend un deuxième groupe (6) composé d'un filetage de noyau (26), d'une première section de fixation (22) et d'une deuxième section de fixation (24),
ledit deuxième groupe (6) est disposé de manière symétrique par rapport au premier groupe (5) à proximité de la partie de préhension (3).

11. Raccord (1) selon l'une des revendications précédentes,
dans lequel le noyau (2) comprend au moins une saillie de verrouillage de noyau (28) qui est disposée à proximité du filetage (26) du noyau,
l'écrou (4) comprend une saillie de verrouillage d'écrou (48) qui est disposée à une deuxième extrémité distale de l'écrou (4),
la saillie de verrouillage de noyau (28) et la saillie de verrouillage d'écrou (48) s'engagent l'une avec l'autre lorsque l'écrou (4) est complètement vissé sur le noyau (2), afin d'empêcher l'écrou de tourner par rapport au noyau (2), et
de préférence, la saillie de verrouillage de noyau (28) et la saillie de verrouillage d'écrou (48) s'engagent également l'une avec l'autre lorsque l'écrou (4) vient presser la deuxième section de fixation (24) sur un tuyau (P), afin de bloquer l'écrou (4) dans cette position de rotation respective par rapport au noyau (2).

12. Système de tuyau (10), en particulier pour une utilisation dans des systèmes d'irrigation,
comprenant un raccord (1) selon l'une des revendications précédentes et un tuyau (P),
dans lequel le raccord (1) présente un état démonté dans lequel l'écrou (4) et le noyau (2) ne sont pas reliés l'un à l'autre,
le raccord (1) présente un état monté (I) dans lequel l'écrou (4) est complètement vissé sur le noyau (2) le long d'une direction de montage (M) et une saillie de verrouillage d'écrou (48) s'engage avec une saillie de verrouillage de noyau (28), le raccord (1) présente un état bloqué (II) dans lequel l'écrou (4) applique une force sur la deuxième section de fixation (24) et le tuyau (P) est empêché de se déplacer entre la première et la deuxième section de fixation (22, 24).

13. Système de tuyau (10) selon la revendication 12,
dans lequel, dans l'état bloqué (II), par comparaison à l'état monté (I), l'écrou (4) est décalé le long de la direction de blocage (S).

14. Procédé d'assemblage d'un raccord (1) et d'un tuyau (P), comprenant les étapes consistant à :
a) fournir un raccord (1) selon l'une des revendications 1 à 11 ;
b) visser l'écrou (4) sur le noyau (2) le long d'une direction de montage (M) jusqu'à ce que la saillie de verrouillage de noyau (28) formée sur le noyau (2) s'engage avec la saillie de verrouillage d'écrou (48) formée sur l'écrou (4),
sachant que l'engagement entre la saillie de verrouillage de noyau (28) et la saillie de verrouillage d'écrou (48) empêche l'écrou (4) et le noyau (2) de tourner l'un par rapport à l'autre ;
c) insérer un tuyau (P) entre la première section de fixation (22) et la deuxième section de fixation (24) du noyau ;
d) appliquer un moment de rotation entre l'écrou (4) et le noyau (2) pour surmonter l'engagement de la saillie de verrouillage d'écrou (48) et de la saillie de verrouillage de noyau (28) afin de déplacer l'écrou (4) le long d'une direction de blocage (S) par rapport au noyau (2),
sachant que la direction de blocage (S) est opposée à la direction de montage (M), et l'écrou pousse la première section de fixation (22) vers la deuxième section de fixation (24), de telle sorte que le tuyau (P) soit bloqué entre la première et la deuxième section de fixation (22, 24).

15. Procédé selon la revendication 14,
dans lequel l'assemblage de l'écrou (4) et du noyau (2) n'est possible que sans tuyau (P) disposé entre la première section de fixation (22) et la deuxième section de fixation (24).
